(19) **Europäisches Patentamt European Patent Office Office européen des brevets**

(11) **EP 2 515 544 B1**

(12) **EUROPEAN PATENT SPECIFICATION**

(45) Date of publication and mention
of the grant of the patent:
**17.08.2016 Bulletin 2016/33**

(51) Int Cl.:
***H04N 13/00*** *(2006.01)*

(21) Application number: **11181614.6**

(22) Date of filing: **16.09.2011**

(54) **3D image processing apparatus and method for adjusting 3D effect thereof**

Vorrichtung zur Verarbeitung eines 3D-Bilds und Verfahren zur Anpassung des resultierenden 3D-Effekts

Appareil de traitement d'image 3D et procédé d'ajustement d'effet 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011 KR 20110036973**

(43) Date of publication of application:
**24.10.2012 Bulletin 2012/43**

(73) Proprietor: **Samsung Electronics Co., Ltd.**
**Suwon-si, Gyeonggi-do, 443-742 (KR)**

(72) Inventors:
• **KIM, Chang-won**
**Gyeonggi-do (KR)**
• **YIM, Da-le**
**Gyeonggi-do (KR)**

(74) Representative: **Appleyard Lees IP LLP**
**15 Clare Road**
**Halifax HX1 2HY (GB)**

(56) References cited:
**WO-A1-2011/013030     WO-A2-2010/079921**
**US-A1- 2010 166 338**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

1. Field

Apparatuses and methods consistent with exemplary embodiments relate to a three-dimensional (3D) image processing apparatus and a method of adjusting a 3D effect thereof, and more particularly to a 3D image processing apparatus in which meta data is used for adjusting a 3D effect of an input video signal, and a method of adjusting the 3D effect thereof.

2. Description of the Related Art

A related art image processing apparatus uses meta data about a video signal in order to enhance picture quality of a two-dimensional (2D) video signal, or uses the meta data about a video signal in order to generate a depth map for generating a three-dimensional (3D) video signal from a 2D video signal. However, the related art image processing apparatus cannot adjust a 3D effect recognized by a user by adjusting in detail the depth map of an input video signal through the meta data of the video signal.

WO 2010/079921 describes a video signal processing method, comprising the steps of: receiving a multi-view coded bitstream including a color picture and a depth picture, the depth picture representing a set of numeric information on a distance between an object and a camera serving as a reference; acquiring data type identification information as well as depth range information from the multi-view video coded bitstream, the data type identification information indicating whether the multi-view video coded bitstream contains depth coded data, the depth range information representing information of maximum and minimum values in variances between two pictures at different visual points; according to the data type identification information, if the multi-view video coded bitstream contains the depth coded data, recovering the depth coded data; adjusting the depth range information by comparing the depth range information with a predetermined threshold range for changes of depth; and displaying 3D video by using the recovered depth coded data and the adjusted depth range information.

WO 2011/013030 describes a three dimensional [3D] video signal provided for transferring to a 3D destination device. Depth metadata is determined indicative of depths occurring in the 3D video data, which depth metadata includes a near value indicative of depths of video data nearest to a user. The 3D video signal, which comprises the 3D video data, now also includes the depth metadata. The 3D destination device is enabled to retrieve the depth metadata, to provide auxiliary data, and to position the auxiliary data at an auxiliary depth in dependence of the retrieved metadata for displaying the auxiliary data in combination with the 3D video data such that obscuring the auxiliary data by said nearest video data, and/or disturbing effects at the boundary of the auxiliary data, is avoided.

US 2010/0166338 describes an image processing method, including extracting compensation information comprising one from among a depth compensation value and a depth value compensated for by using the depth compensation value; when the compensation information comprises the depth compensation value, compensating for a depth value to be applied to a pixel of a two-dimensional (2D) image by using the depth compensation value, and generating a depth map about the 2D image by using the compensated depth value, and when the compensation information comprises the compensated depth value, generating the depth map about the 2D image by using the compensated depth value; obtaining positions in a left-eye image and a right-eye image by using the depth map, wherein the pixel of the 2D image is mapped to the positions; and generating the left-eye image and the right-eye image comprising the positions to which the pixel is mapped.

SUMMARY

According to the present invention there is provided an apparatus and method as set forth in the appended claims. Other features of the invention will be apparent from the dependent claims, and the description which follows.

BRIEF DESCRIPTION OF THE DRAWINGS

The above and/or other aspects will become apparent and more readily appreciated from the following description of exemplary embodiments, taken in conjunction with the accompanying drawings, in which:

FIG. 1 is a control block diagram of a three-dimensional (3D) image processing apparatus according to an exemplary embodiment;
FIG. 2 is a control block diagram of a meta data processor included in the 3D image processing apparatus of FIG. 1;

FIGs. 3A and 3B are views showing an exemplary embodiment of a processing operation of the meta data processor of FIG. 2;

FIG. 4 is a view showing another exemplary embodiment of the processing operation of the meta data processor of FIG. 2;

FIG. 5 is a view showing still another exemplary embodiment of the processing operation of the meta data processor of FIG. 2; and

FIG. 6 is a flowchart showing a control operation of the 3D image processing apparatus of FIG. 1.

DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

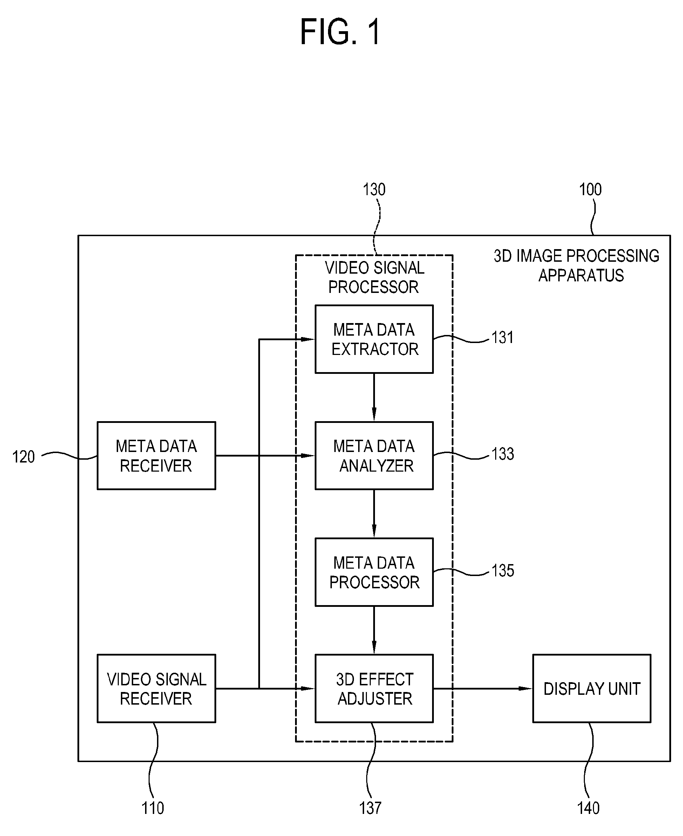

FIG. 1 is a control block diagram of a three-dimensional (3D) image processing apparatus 100 according to an exemplary embodiment.

A 3D image processing apparatus 100 in the present exemplary embodiment adjusts 3D effect information about an input video signal on the basis of meta data of the input video signal, and thus adjusts, in detail, a 3D effect to be recognized by a user, thereby maximizing the 3D effect of the input video signal. The 3D effect information contains depth map information about the input video signal, and the 3D image processing apparatus 100 in the present exemplary embodiment adjusts the depth map information on the basis of the meta data about the input video signal, thereby adjusting the 3D effect of the input video signal in more detail.

The 3D image processing apparatus 100 includes an electronic apparatus capable of processing and outputting a 3D video signal. The 3D image processing apparatus 100 may be achieved by a display apparatus that processes a 3D video signal and displays the processed 3D video signal on a display unit 140. Also, the 3D image processing apparatus 100 may be achieved by a set-top box, a Blu-ray disc (BD), a digital versatile disc (DVD) player, a game console, a computing device, etc., which do not include the display unit 140.

The 3D image processing apparatus 100 may include an electronic apparatus capable of receiving a two-dimensional (2D) video signal from an exterior and generating, processing and outputting a 3D video signal. In this case, the 3D image processing apparatus 100 may generate a depth map based on meta data, and thus generate a 3D video signal.

The 3D image processing apparatus 100 may include an electronic apparatus capable of receiving a 3D video signal from an exterior and processing and outputting the 3D video signal. In this case, if the video signal contains depth map information in the form of meta data, the depth map information is extracted and used to thereby process a 3D video signal. On the other hand, if the video signal does not contain the depth map information in the form of meta data, the 3D image processing apparatus 100 estimates a depth map from the received 3D video signal by a generally known estimation theory, and thus processes a 3D video signal on the basis of the estimated depth map.

The meta data about the input video signal may be included in the video signal and transmitted to the 3D video processing apparatus 100, or the meta data may be transmitted separately, e.g., from a separate external device (not shown), to the 3D image processing apparatus 100. In the former case, the 3D image processing apparatus 100 may further include a meta data extractor 131 that extracts the meta data from the received video signal and transmits the extracted meta data to a meta data analyzer 133. In the latter case, the 3D image processing apparatus 100 may further include a meta data receiver 120 that receives meta data about a video signal from the external device (not shown). At this time, the external device (not shown) may communicate with the 3D image processing apparatus 100 and transmit the meta data to the 3D image processing apparatus 100 if receiving a request for the meta data about the video signal from the 3D image processing apparatus 100. Such an external device (not shown) may be achieved by a server, a web server, etc.

As shown in FIG. 1, the 3D image processing apparatus 100 includes a video signal receiver 110, a meta data receiver 120, a video signal processor 130 and a display unit 140.

The video signal receiver 110 may receive a 2D video signal or a 3D video signal from an external video source (not shown). The video signal receiver 110 may receive a radio frequency (RF) signal transmitted from a broadcasting station wirelessly, or a video signal complying with composite video, component video, super video, Syndicat des Constructeurs des Appareils Radiorécepteurs et Téléviseurs (SCART), high definition multimedia interface (HDMI), etc., via a wire. Also, the video signal receiver 110 may have access to the web server (not shown) and may receive a data packet of web contents. Furthermore, the video signal receiver 110 may receive a 2D video signal containing meta data or a 3D video signal containing meta data. In this case, the video signal receiver 110 may transmit the received 2D video signal or 3D video signal containing the meta data to the meta data extractor 131.

The meta data receiver 120 may receive meta data about a 2D video signal or a 3D video signal from an external device (not shown). If the video signal receiver 110 receives a 2D video signal or a 3D video signal containing no meta data, the meta data receiver 120 may communicate with the external device and request and receive the meta data corresponding to the received video signal. The meta data receiver 120 may transmit the received meta data to a meta data analyzer 133.

The video signal processor 130 may process a video signal received by the video signal receiver 110 and meta data received by the meta data receiver 120. The video signal processor 130 may perform a general video signal process so that the received video signal can be displayed on the display unit 140. For example, the video signal processor 130 may perform decoding and encoding corresponding to various video formats, de-interlacing, frame refresh rate conversion, scaling, noise reduction for improving picture quality, detail enhancement, line scanning, etc. For example, the video signal processor 130 may process a 3D video signal so that video signals respectively corresponding to a left-eye image and a right-eye image can be alternately scanned to the display unit 140.

The video signal processor 130 may include a meta data extractor 131, the meta data analyzer 133, a meta data processor 135, and a 3D effect adjuster 137.

The meta data extractor 131 can extract meta data from a video signal and transmit the extracted meta data to the meta data analyzer 133 when receiving the video signal containing the meta data from the video signal receiver 110. If the meta data receiver 120 receives the meta data separately from transmission of the video signal, the meta data extractor 131 may be omitted.

The meta data analyzer 133 can receive meta data about a video signal received by the video signal receiver 110 through the meta data extractor 131 or the meta data receiver 120. The meta data analyzer 133 can analyze the received meta data and extract at least one auxiliary data to be used in adjusting 3D effect information of an input video signal received by the video signal receiver 110. The meta data analyzer 133 may extract a plurality of auxiliary data. The auxiliary data may include at least one of content information corresponding to a video signal received by the video signal receiver 110, stereo camera information about a 3D video signal if a video signal received by the video signal receiver 110 is the 3D video signal, and image-related information about a video signal received by the video signal receiver 110. The content information may include at least one of genre information of contents, story line information of the contents, and viewing age information of the contents. The stereo camera information may include at least one of lens position information of a stereo camera, focusing information of the stereo camera, lighting information of the stereo camera, and exposure information of the stereo camera. The image-related information may include at least one of scene change information of an input video signal, key frame information of the input video signal, video attribute information of the input video signal, and minimum and maximum depth value information of the input video signal.

Here, the 3D effect information of the input video signal may contain the depth map information about the input video signal, and the auxiliary data may contain depth adjusting data to be used in adjusting the depth map information.

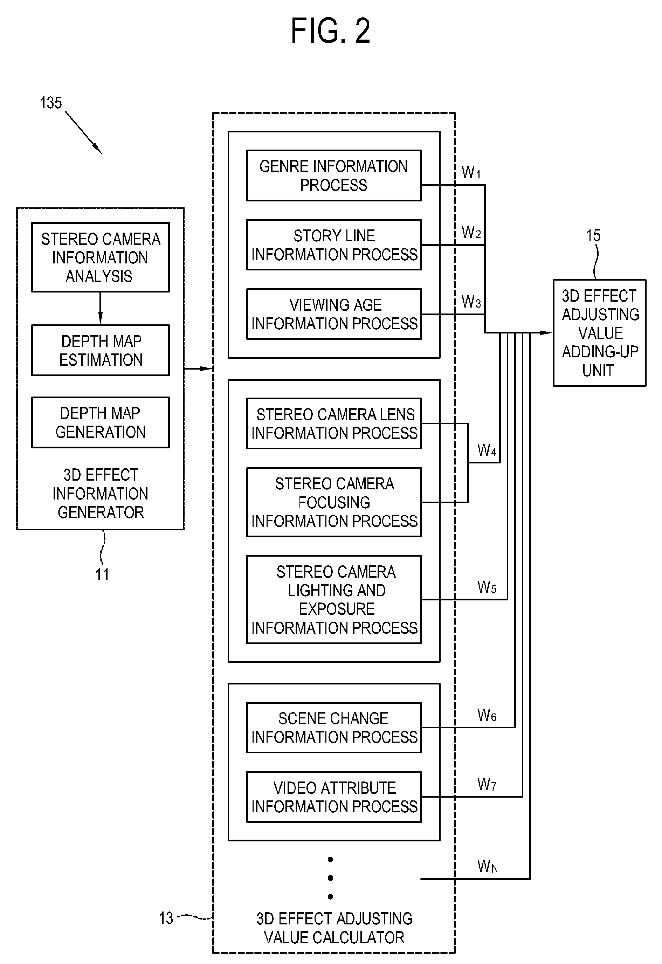

The meta data processor 135 receives at least one auxiliary data extracted by the meta data analyzer 133, and calculates at least one 3D effect adjusting value about the 3D effect information of the video signal received by the video signal receiver 110, thereby transmitting the 3D effect adjusting value to the 3D effect adjuster 137. The meta data processor 135 will be described in detail with reference to FIGs. 2 to 4.

The 3D effect adjuster 137 adjusts or renews the 3D effect information of the video signal received by the video signal receiver 110 on the basis of the 3D effect adjusting value received from the meta data processor 135, and adjusts the received video signal to have a 3D effect based on the renewed (i.e., adjusted) 3D effect information.

The display unit 140 displays an image based on a video signal output from the video signal processor 130. The video signal processor 130 performs general video processing, and the 3D video signal having the 3D effect adjusted by the 3D effect adjuster 137 is received to thereby alternately display a left-eye image and a right-eye image. The display 140 may be achieved by liquid crystal, plasma, a light-emitting diode, an organic light-emitting diode, a surface-conduction electron-emitter, a carbon nano-tube, nano-crystal, or the like various display types without any limitation.

Referring to FIGs. 2 to 4, configuration and operation of the meta data processor 135 will be described below in detail. FIG. 2 is a control block diagram of the meta data processor 135. As shown in FIG. 2, the meta data processor 135 includes a 3D effect information generator 11, a 3D effect adjusting value calculator 13, and a 3D effect adjusting value adding-up unit 135.

The 3D effect information generator 11 estimates or generates 3D effect information about a video signal received by the video signal receiver 110, and the 3D effect information includes a depth map of the video signal.

A. The 3D effect information generator 11 may estimate or generate a depth map on the basis of a related art depth map estimation or generation theory or algorithm so as to generate a 3D video signal corresponding to a received 2D video signal if an input video signal of the video signal receiver 110 is the 2D video signal.

B. The 3D effect information generator 11 may estimate a depth map on the basis of the related art depth map estimation theory by analyzing a 3D video signal if an input video signal of the video signal receiver 110 is the 3D video signal and the 3D video signal contains no depth map information.

C. The 3D effect information generator 11 may generate a depth map based on stereo camera information if an input video signal of the video signal receiver 110 is a 3D video signal and the 3D video signal contains, rather than depth information, stereo camera information in the form of meta data. The stereo camera information may contain information about at least one of the kinds of lenses (e.g., view angles according to the kinds of lenses), distance between the stereo cameras, shooting distance, focusing distance, exposure, lighting, etc. Accordingly, the 3D effect information generator 11 may calculate a depth value of an object included in a video signal by the following expression 1 on the basis of the stereo camera information:

[Expression 1]

$$L_d = \frac{L_b}{a_1 a_2} \quad a_1 = \frac{d_c}{d_e} \quad a_2 = \frac{\tan\frac{\beta}{2}}{\tan\frac{\alpha}{2}}$$

where, Ld is a position of a stereoscopic object, Lb is a shooting distance, dc is a distance between the stereo cameras, de is a distance between two eyes, $\alpha$ is the kind of lens or a view angle of the lens, and $\beta$ is a view angle of a human. Thus, if values of elements are analyzed from the stereo camera and input to the expression 1, a position of the stereoscopic object is determined. Here, the position of the stereoscopic object is the same as a depth value of the object. Accordingly, if information about the stereo camera is given in the form of meta data, the depth value of the object can be easily calculated through the expression 1.

According to an exemplary embodiment, the 3D effect information generator 11 can estimate or generate a depth map about the video signal received through the video signal receiver 110 even though the video signal received through the video signal receiver 110 is a 2D video signal or a 3D video signal or even though the video signal contains no depth map.

The 3D effect adjusting value calculator 13 calculates a 3D effect adjusting value for adjusting 3D effect information estimated or generated by the 3D effect information generator 11 by analyzing and processing the auxiliary data received through the meta data analyzer 133.

Here, as described above, the 3D effect information includes the depth map estimated or generated with respect to the input video signal, the auxiliary data includes depth adjusting data to be usable in adjusting the depth map, and the 3D effect adjusting value includes a depth adjusting value for adjusting a depth value of the depth map. Thus, the 3D effect adjusting value calculator 13 analyzes and processes the depth adjusting data received through the meta data analyzer 133, and calculates the depth adjusting value for adjusting the depth map generated or estimated by the 3D effect information generator 11.

The 3D effect adjusting value calculator 13 calculates the depth adjusting values differently in accordance with the attributes of the depth adjusting data received from the meta data analyzer 133. For instance, the 3D effect adjusting value calculator 13 calculates the depth adjusting values differently in accordance with the attributes of the depth adjusting data as follows.

D. If the depth adjusting data received from the meta data analyzer 133 is genre information of contents, the 3D effect adjusting value calculator 13 calculates the depth adjusting values differently in accordance with the genres of the contents. For example, if the genre of the contents is melodrama, a user's immersion in the contents may decreases when the depth value is high, so that the depth adjusting value can be calculated to have a depth value lower than the depth value of the depth map estimated or generated by the 3D effect information generator 11. Also, if the genre of the contents is sports, an action movie or a war movie, the liveliness of the sports, the action movie or the war movie may be insufficient when the depth value is low, so that the depth adjusting value can be calculated to have a depth value higher than the depth value of the depth map estimated or generated by the 3D effect information generator 11.

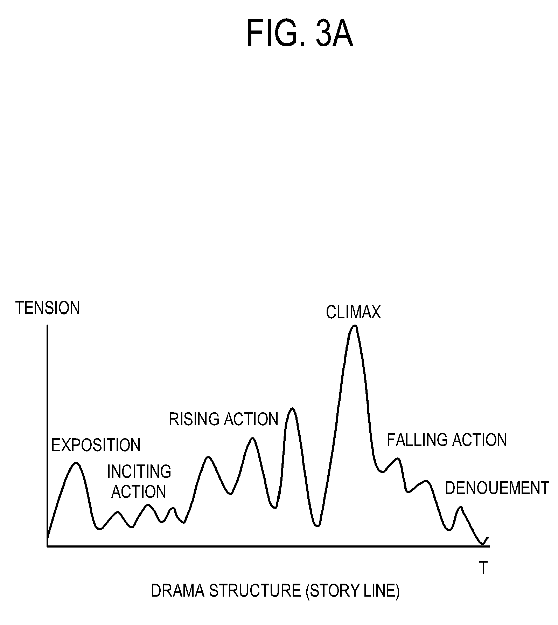

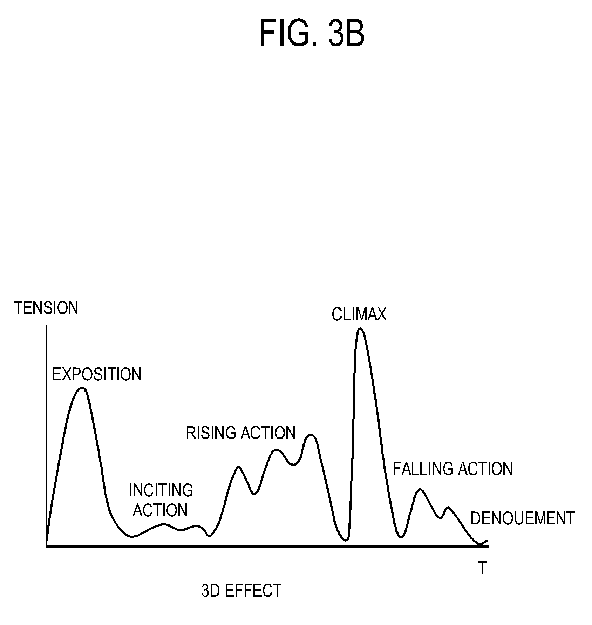

E. If the depth adjusting data received from the meta data analyzer 133 is story line information, the 3D effect adjusting value calculator 13 calculates the depth adjusting values varied in the 3D effect of the video signal depending on the story line. FIG. 3A shows the story line or drama structure of the video signal. In FIG. 3A, the story line information includes information about exposition, an inciting action, a rising action, a climax, a falling action and a denouement. As shown in FIG. 3B, the 3D effect adjusting value calculator 13 may calculate the depth adjusting value to have a depth value corresponding to an inciting action portion higher or greater by a predetermined range than the depth value based on the depth map estimated or generated by the 3D effect information generator 11, thereby arousing a viewer's curiosity and increasing the user's immersion in the inciting action portion of the video signal. Also, in order to give maximum dramatic tension to a user in a climax portion of the video signal, the 3D effect adjusting value calculator 13 calculates the depth adjusting value to have a depth value smaller by a predetermined range than the depth value based on the depth map estimated or generated by the 3D effect information generator 11 just before the climax, and then calculates the depth adjusting value to have a depth value higher by a predetermined range than the depth value based on the depth map estimated or generated by the 3D effect information generator 11 in the climax portion. Accordingly, the 3D effect adjusting value calculator 13 can calculate the depth adjusting value to have a depth value in proportion to the story line or dramatic structure of the video signal.

F. If the depth adjusting data received from the meta data analyzer 133 is viewing age information of the contents, the 3D effect adjusting value calculator 13 calculates the depth adjusting values varied in the 3D effect of the video signal depending on the viewing age information. For example, the 3D effect adjusting value calculator 13 calculates the depth adjusting value to have a depth value lower by a predetermined range than the depth value based on the depth map estimated or generated by the 3D effect information generator 11 as a viewing age rating gets lower, and calculates the depth adjusting value to have a depth value higher by a predetermined range than the depth value based on the depth map estimated or generated by the 3D effect information generator 11 as a viewing age rating gets higher.

G. If the depth adjusting data received from the meta data analyzer 133 is stereo camera information, the 3D effect adjusting value calculator 13 may receive the stereo camera information analyzed by the 3D effect information generator 11. The stereo camera information may include information about at least one of the kinds of lenses (e.g., view angles according to the kinds of lenses), distance between the stereo cameras, shooting distance, focusing distance, exposure, lighting, etc. Also, the 3D effect adjusting value calculator 13 may receive a depth value of an object calculated using the expression 1, described above, by the 3D effect information generator 11. If the depth map of the video signal is estimated by the general depth map estimation theory, the 3D effect adjusting value calculator 13 compares the depth value calculated using the expression 1 by the 3D effect information generator 11 with the depth value of the object in the estimated depth map. If the two depth values are different from each other, the depth adjusting value is calculated to make a depth value calculated using the expression 1 in the estimated depth map. The expression 1 shows the depth values derived using the real stereo camera information, so that a user can feel a 3D effect of reality from an image displayed through the display unit.

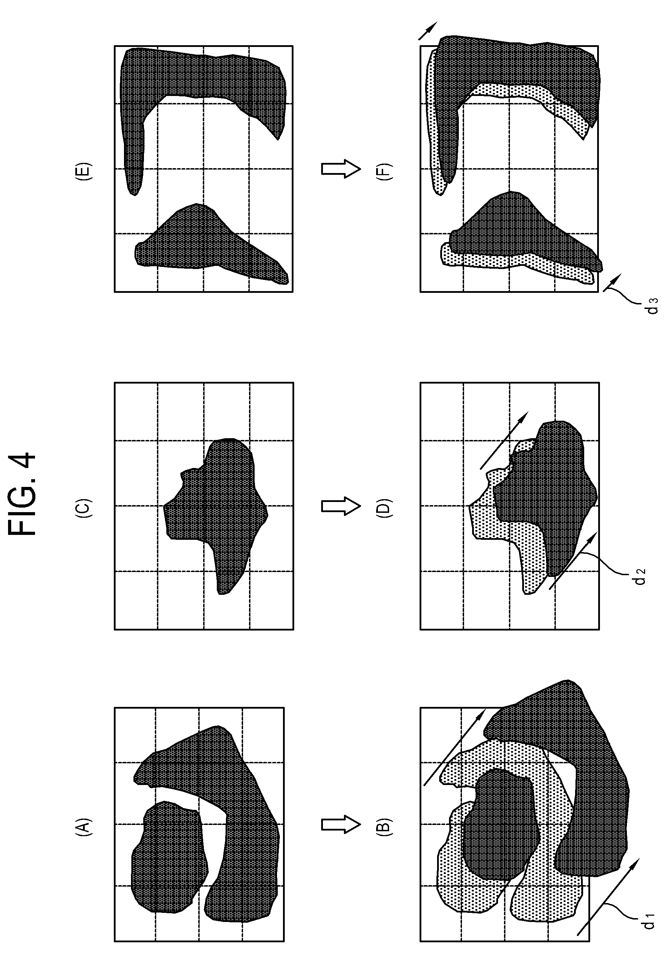

H. If the depth adjusting data received from the meta data analyzer 133 is exposure information or lighting information of the stereo camera information, the 3D effect adjusting value calculator 13 calculates the depth adjusting values varied in the 3D effect of the video signal depending on brightness of the video signal. In the dark, a human's eyesight falls and the human's view is also narrowed. Since light intensity of neighbor light sources is weak at dark, quantity of light entering the eyes has to be increased. To have such an effect, the pupils of the eyes are dilated. At this time, instead of increasing the quantity of light and distinguishing an object with small quantity of light, the eyesight falls and the view is also narrowed. Thus, a user cannot properly feel a 3D effect in a dark region of an image even though a depth value is high. Accordingly, the 3D effect adjusting value calculator 13 can calculate a depth adjusting value to make the 3D effect of the video signal vary depending on the brightness of the videos signal, which will be described with reference to FIG. 4. The 3D effect adjusting value calculator 13 can ascertain distribution of a dark region of an image on the basis of at least one of the exposure information and the lighting information of the stereo camera information, and video attribute information.

As shown in FIG. 4, if a dark region occupies most of an image (A), a human's two eyes dilate pupils to recognize an object in a dark scene, and thus the human's eyesight falls and s/he has narrow view. In this case, a user cannot satisfactorily feel the 3D effect even though the depth value based on the depth map estimated or generated in the 3D effect information generator 11 is high in the dark region. Thus, if most of the whole image region is dark, the 3D effect adjusting value calculator 13 can calculate a depth adjusting value to have a depth value d1 greater by a predetermined range than the depth value based on the depth map estimated or generated by the 3D effect information generator 11 (refer to (B) of FIG. 4).

If a dark region of an image occupies a center region of a screen (C), the 3D effect adjusting value calculator 13 can calculate a depth adjusting value to have a depth value d2 greater by a predetermined range than the depth value based on the depth map estimated or generated by the 3D effect information generator 11, but smaller by a predetermined range than the depth value d1 of (B) in the dark region (refer to (D) of FIG. 4). Thus, the depth value d2 of (D) may be smaller than the depth value d1 of (B).

If a dark region of an image occupies an edge region of a screen (E), the 3D effect adjusting value calculator 13 can calculate a depth adjusting value to have a depth value d3 greater by a predetermined range than the depth value based on the depth map estimated or generated by the 3D effect information generator 11 but smaller by a predetermined range than the depth value d2 of (D) in the dark region (refer to (F) of FIG. 4). Thus, the depth value d3 of (F) may be smaller than the depth value d2 of(D).

I. If the depth adjusting data received from the meta data analyzer 133 is video attribute information of a video signal, the 3D effect adjusting value calculator 13 calculates the depth adjusting values varied in the 3D effect of the video signal depending on video attributes. The video attribute information may include brightness, contrast, color temperature, etc., of the video signal. Among the video attribute information, the color temperature is as follows. According to a human's recognition, an object in a region having a low color temperature (reddish color) looks more projected than real, and an object in a region having a high color temperature (bluish color) looks more recessed than the real. Thus, the 3D effect adjusting value calculator 13 analyzes distribution of the color temperature on the basis of the video attribute information, and calculates a depth adjusting value to have a depth value smaller by a predetermined range than the depth value based on the depth map estimated or generated by the 3D effect information generator 11 in the region having the low color temperature. On the other hand, the 3D effect adjusting value calculator 13 calculates a depth adjusting value to have a depth value greater by a predetermined range than the depth value based on the depth map estimated or generated by the 3D effect information generator 11 in the region having the high color temperature.

It is possible to receive one or a plurality of auxiliary data from the meta data analyzer 133. At this time, the auxiliary data may include the depth adjusting data usable in adjusting the depth map of the input video signal. Thus, there may also be one or a plurality of depth adjusting data. If the plurality of depth adjusting data is received from the meta data analyzer 133, the 3D effect adjusting value calculator 13 analyzes and processes the plurality of depth adjusting data as described above, and calculates a plurality of depth adjusting values, thereby transmitting the calculated values to the 3D effect adjusting value adding-up unit 15.

The 3D effect adjusting value adding-up unit 15 may receive the depth adjusting value from the 3D effect adjusting value calculator 13. If one depth adjusting value is received, the one depth adjusting value is directly transmitted to the 3D effect adjuster 137. If a plurality of depth adjusting values are received, the 3D effect adjusting value adding-up unit 15 weights the plurality of depth adjusting values and calculates an added-up final depth adjusting value, thereby transmitting the final depth adjusting value to the 3D effect adjuster 137.

Referring back to FIG. 2, the 3D effect adjusting value calculator 13 calculates a plurality of depth adjusting values W1, W2, W3, W4, W5, W6, W7,..., WN from a plurality of depth adjusting data (i.e., N data), and transmits the calculated plurality of depth adjusting values to the 3D effect adjusting value adding-up unit 15. The 3D effect adjusting value adding-up unit 15 receives the plurality of depth adjusting values and may derive the final depth adjusting value through the following expression 2. Eventually, a plurality of depth adjusting values are weighted and added up.

[Expression 2]

$$3D_{\text{Effect}} = \frac{\sum_{n=1}^{N} w_n \, 3D_{\text{Effect}}(n)}{\sum_{n=1}^{N} w_n}$$

If the 3D effect adjusting value adding-up unit 15 calculates the final depth adjusting value through the expression 2 and transmits the calculated final depth adjusting value to the 3D effect adjuster 137, the 3D effect adjuster 137 renews (i.e., adjusts) the depth map estimated or generated by the 3D effect information generator 11 on the basis of the final depth adjusting value, so that the 3D effect of the 3D video signal can be adjusted using the renewed depth map. The video signal of which the 3D effect is adjusted may be transmitted to the display unit 140.

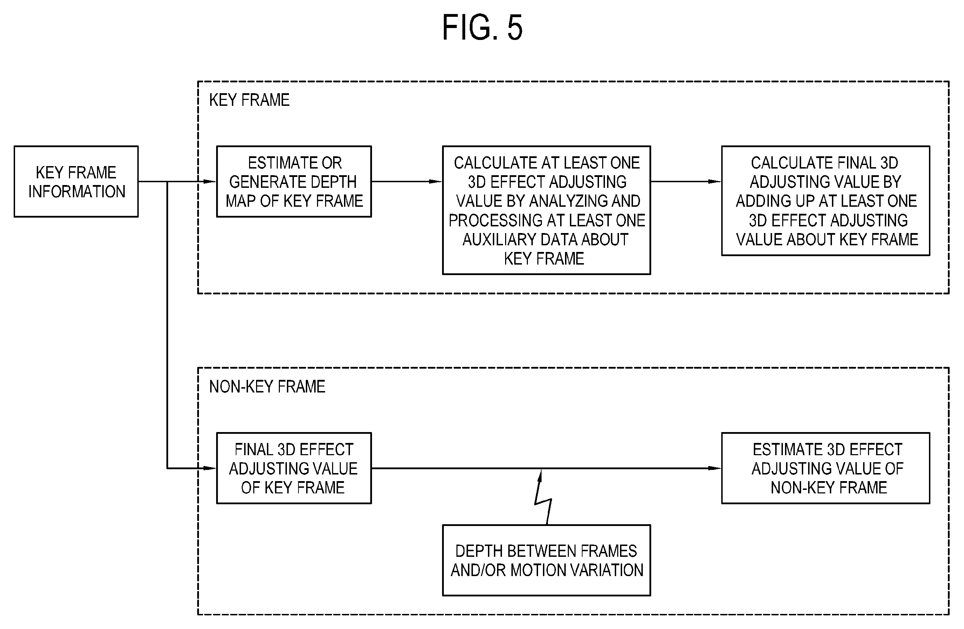

FIG. 5 is a view showing still another exemplary embodiment of the processing operation of the meta data processor of FIG. 2, which shows the processing operation when receiving key frame information as the meta data.

As shown in FIG. 5, if the meta data about the input video signal contains the key frame information of the video signal, the meta data processor 135 receives the key frame information from the meta data analyzer 133.

Below, the operation of the meta data processor 135 with regard to the key frame will be described. The 3D effect information generator 11 of the meta data processor 135 may further receive at least one auxiliary data about the key frame from the meta data analyzer 133. Thus, on the basis of the at least one auxiliary data about the key frame, the depth map is generated by the stereo camera information analysis or estimated by the general depth map estimation theory. At this time, the operation of the 3D effect information generator 11 is performed by the same or similar methods as described in exemplary embodiments in accordance with A to C described above. The 3D effect adjusting value calculator 13 of the meta data processor 135 may further receive at least one auxiliary data about the key frame from the meta data analyzer 133. Thus, using the at least one auxiliary data received with regard to the key frame, the 3D effect adjusting value can be calculated by the same or similar methods as described in exemplary embodiments in accordance with D to I described above. If a plurality of 3D effect adjusting values are calculated, the 3D effect adjusting value adding-up unit 15 adds up the plurality of 3D effect adjusting values and derives the final 3D effect adjusting value about the key frame.

Regarding a frame (i.e., a non-key frame) besides the key frame, the 3D effect adjusting value calculator 13 of the meta data processor 135 may estimate the 3D effect adjusting value for a non-key frame on the basis of the final 3D effect adjusting value for the key frame. At this time, using a difference value in motion information, a difference value in a depth value, a difference value in an image pixel, etc., between the key frames and the non-key frame, a 3D effect adjusting value of the non-key frame can be estimated on the basis of the 3D effect adjusting value of the key frame. In this case, the 3D effect adjusting value calculator 13 advantageously does not have to calculate the 3D effect adjusting value with regard to all frames. The difference value in motion information, the difference value in a depth value, the difference value in an image pixel, etc., between the key frames and the non-key frame may also be included in the meta data, or may be estimated by the video signal processor 130.

If the key frame information of the video signal is not included in the meta data about the input video signal, the 3D effect adjusting value calculator 13 may calculate the 3D effect adjusting value by the same or similar methods as described in exemplary embodiments in accordance with D to I described above on the basis of the auxiliary data of the video signal with respect to all frames.

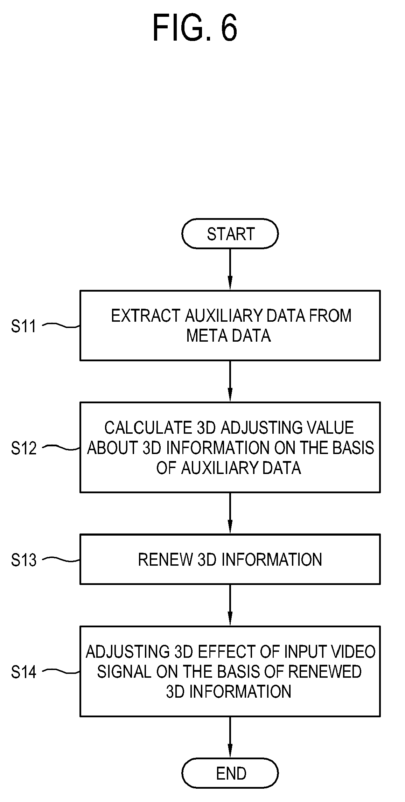

FIG. 6 is a flowchart showing a control operation of the 3D image processing apparatus of FIG. 1.

As shown therein, the meta data analyzer 133 of the 3D image processing apparatus 100 analyzes the meta data about the input video signal, and extracts the auxiliary data (operation S11). As described above, if the meta data is contained in the video signal, the meta data can be extracted from the video signal and used. Also, the meta data may be received separately from the video signal. The auxiliary data includes the depth adjusting data usable in adjusting the depth map of the video signal. There may be a plurality of auxiliary data. The auxiliary data may include at least one of content information corresponding to the input video signal, stereo camera information about the input video signal, and image-related information about the input video signal.

The meta data processor 135 calculates the 3D effect adjusting value about the 3D effect information on the basis of the extracted auxiliary data (operation S12). The 3D effect information contains the depth map about the input video signal, and the 3D effect adjusting value contains the depth adjusting value for adjusting the depth map. When receiving the video signal containing no depth map, the 3D effect information generator 11 of the meta data processor 135 may estimate the depth map about the input video signal through the general depth map estimation theory or generate the depth map through the meta data. If a plurality of auxiliary data is received from the meta data analyzer 133, the plurality of auxiliary data is analyzed to calculate respective 3D effect adjusting values, and the plurality of 3D effect adjusting values are weighted and added up, thereby calculating the final 3D effect adjusting value.

When receiving the 3D effect adjusting value, the 3D effect adjuster 137 of the meta data processor 135 renews (i.e., adjusts) the 3D effect information on the basis of the received 3D effect adjusting value (operation S13), and adjusts the 3D effect of the input video signal on the basis of the renewed 3D effect information (operation S14).

As described above, according to an exemplary embodiment, a depth map of an input video signal is adjusted in accordance with attributes of various kinds of meta data about a video signal, so that a 3D effect to be recognized by a user can be adjusted in detail, thereby maximizing the 3D effect of the input video signal.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, while not required in all aspects, one or more units of the 3D image processing apparatus 130 may include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims.

**Claims**

1. A three-dimensional (3D) image processing apparatus (100) comprising:

   a meta data analyzer (133) which is arranged to analyze meta data of an input video signal, the meta data comprising a depth map , and further arranged to extract, from the meta data, auxiliary data for use in adjusting the depth map of the input video signal wherein the auxiliary data comprises stereo camera information including at least one of: distance information between stereo cameras, lens information of a stereo camera, focusing information of a stereo camera, lighting information of a stereo camera, and exposure information of a stereo camera;

a meta data processor (135) which is arranged to calculate a depth adjusting value for adjusting the depth map according to the stereo camera information of the extracted auxiliary data; and

a depth adjuster (137) which is arranged to adjust the depth map according to the calculated depth adjusting value, and to adjust the input video signal to have a 3D depth effect based on the adjusted depth map

2. The 3D image processing apparatus according to claim 1, wherein the meta data processor (135) is arranged to calculate a plurality of depth adjusting values corresponding to a plurality of auxiliary data extracted, from the meta data, by the meta data analyzer (133), to calculate a final depth adjusting value by weighting and adding the calculated plurality of depth adjusting values, and to transmit the calculated final depth adjusting value to the depth adjuster (137).

3. The 3D image processing apparatus according to claim 1 or 2, wherein the auxiliary data further comprises content information corresponding to the input video signal, the content information comprising at least one of genre information about content of the input video signal, story line information about the content, and viewing age information about the content.

4. The 3D image processing apparatus according to one of claims 1 to 3, wherein the auxiliary data further comprises image-related information about the input video signal, comprising at least one of scene change information of the input video signal, video attribute information of the input video signal, and minimum and maximum depth value information of the input video signal.

5. The 3D image processing apparatus according to one of claims 1 to 4, wherein the auxiliary data comprises image-related information corresponding to the input video signal in the form of key frame information, and the meta data processor is arranged to calculate a depth adjusting value of a key frame and to estimate a depth adjusting value of a non-key frame according to the calculated depth adjusting value of the key frame.

6. A method of adjusting a three-dimensional (3D) depth effect of a 3D image processing apparatus, the method comprising:

analyzing meta data about an input video signal, the meta data comprising a depth map, and extracting, from the meta data, auxiliary data for use in adjusting the depth map of the input video signal by adjusting the depth map wherein the auxiliary data comprises stereo camera information including at least one of: distance information between stereo cameras, lens information of a stereo camera, focusing information of a stereo camera, lighting information of a stereo camera, and exposure information of a stereo camera;

calculating a depth adjusting value for adjusting the depth map according to the stereo camera information of the extracted auxiliary data (S12); and

adjusting the depth map according to the calculated depth adjusting value (S13), and adjusting the input video signal to have a 3D depth effect based on the adjusted depth map (S14)

7. The method according to claim 6, wherein the calculating of the depth adjusting value (S12) comprises calculating a plurality of depth adjusting values corresponding to a plurality of auxiliary data extracted in the extracting of the auxiliary data, and calculating a final depth adjusting value by weighting and adding the calculated plurality of depth adjusting values.

8. The method according to claim 6 or 7, wherein the auxiliary data further comprises content information corresponding to the input video signal, wherein the content information comprises at least one of genre information about content of the input video signal, story line information about the content, and viewing age information about the content.

9. The method according to one of claims 6 to 8, wherein the auxiliary data further comprises image-related information about the input video signal, comprising at least one of scene change information of the input video signal, video attribute information of the input video signal, and minimum and maximum depth value information of the input video signal.

10. The method according to one of claims 6 to 9, wherein the auxiliary data further comprises image-related information about the input video signal in the form of key frame information, and the method comprises calculating a depth adjusting value of a key frame and estimating a depth adjusting value of a non-key frame according to the calculated depth adjusting value of the key frame.

**Patentansprüche**

1. Vorrichtung (100) zur Verarbeitung eines dreidimensionalen (3D-) Bildes, die Folgendes umfasst:

   einen Metadaten-Analysator (133), der dafür angeordnet ist, Metadaten eines Eingangsvideosignals zu analysieren, wobei die Metadaten eine Tiefenkarte umfassen, und ferner dafür angeordnet ist, aus den Metadaten Hilfsdaten zur Verwendung beim Anpassen der Tiefenkarte des Eingangsvideosignals zu extrahieren, wobei die Hilfsdaten Stereokamera-Informationen umfassen, die wenigstens eines von Folgendem einschließen: Entfernungsinformationen zwischen Stereokameras, Linseninformationen einer Stereokamera, Fokussierungsinformationen einer Stereokamera, Beleuchtungsinformationen einer Stereokamera und Belichtungsinformationen einer Stereokamera,
   einen Metadaten-Prozessor (135), der dafür angeordnet ist, einen Tiefenanpassungswert zum Anpassen der Tiefenkarte entsprechend den Stereokamerainformationen der extrahierten Hilfsdaten zu berechnen, und
   einen Tiefenanpasser (137), der dafür angeordnet ist, die Tiefenkarte entsprechend dem berechneten Tiefenanpassungswert anzupassen und das Eingangsvideosignal auf der Grundlage der angepassten Tiefenkarte so anzupassen, dass es einen 3D-Tiefeneffekt hat.

2. Vorrichtung zur Verarbeitung eines 3D-Bildes nach Anspruch 1, wobei der Metadaten-Prozessor (135) dafür angeordnet ist, mehrere Tiefenanpassungswerte zu berechnen, die mehreren durch den Metadaten-Analysator (133) aus den Metadaten extrahierten Hilfsdaten entsprechen, um durch das Wichten und Addieren der berechneten mehreren Tiefenanpassungswerte einen abschließenden Tiefenanpassungswert zu berechnen und den berechneten abschließenden Tiefenanpassungswert an den Tiefenanpasser (137) zu übermitteln.

3. Vorrichtung zur Verarbeitung eines 3D-Bildes nach Anspruch 1 oder 2, wobei die Hilfsdaten ferner Inhaltsinformationen umfassen, die dem Eingangsvideosignal entsprechen, wobei die Inhaltsinformationen wenigstens eines von Genreinformationen über den Inhalt des Eingangsvideosignals, Handlungsinformationen über den Inhalt und Betrachtungsalter-Informationen über den Inhalt umfassen.

4. Vorrichtung zur Verarbeitung eines 3D-Bildes nach einem der Ansprüche 1 bis 3, wobei die Hilfsdaten ferner bildbezogene Informationen über das Eingangsvideosignal umfassen, die wenigstens eines von Szenenwechsel-Informationen des Eingangsvideosignals, Videoattribut-Informationen des Eingangsvideosignals und Minimal- und Maximaltiefenwert-Informationen des Eingangsvideosignals umfassen.

5. Vorrichtung zur Verarbeitung eines 3D-Bildes nach einem der Ansprüche 1 bis 4, wobei die Hilfsdaten bildbezogene Informationen entsprechend dem Eingangsvideosignal in der Form von Schlüsselbild-Informationen umfassen und der Metadaten-Prozessor dafür angeordnet ist, einen Tiefenanpassungswert eines Schlüsselbildes zu berechnen und einen Tiefenanpassungswert eines Nicht-Schlüsselbildes entsprechend dem berechneten Tiefenanpassungswert des Schlüsselbildes abzuschätzen.

6. Verfahren zur Anpassung eines dreidimensionalen (3D-) Tiefeneffekts einer Vorrichtung zur Verarbeitung eines 3D-Bildes, wobei das Verfahren Folgendes umfasst:

   das Analysieren von Metadaten über ein Eingangsvideosignal, wobei die Metadaten eine Tiefenkarte umfassen, und das Extrahieren, aus den Metadaten, von Hilfsdaten zur Verwendung beim Anpassen der Tiefenkarte des Eingangsvideosignals durch das Anpassen der Tiefenkarte, wobei die Hilfsdaten Stereokamera-Informationen umfassen, die wenigstens eines von Folgendem einschließen: Entfernungsinformationen zwischen Stereokameras, Linseninformationen einer Stereokamera, Fokussierungsinformationen einer Stereokamera, Beleuchtungsinformationen einer Stereokamera und Belichtungsinformationen einer Stereokamera,
   das Berechnen eines Tiefenanpassungswertes zum Anpassen der Tiefenkarte entsprechend den Stereokamerainformationen der extrahierten Hilfsdaten (S12) und
   das Anpassen der Tiefenkarte entsprechend dem berechneten Tiefenanpassungswert (S13) und
   das Anpassen des Eingangsvideosignals auf der Grundlage der angepassten Tiefenkarte, so dass es einen 3D-Tiefeneffekt hat (S14).

7. Verfahren nach Anspruch 6, wobei das Berechnen des Tiefenanpassungswertes (S12) das Berechnen mehrerer Tiefenanpassungswerte, die mehreren beim Extrahieren der Hilfsdaten extrahierten Hilfsdaten entsprechen, und das Berechnen eines abschließenden Tiefenanpassungswertes durch das Wichten und Addieren der berechneten mehreren Tiefenanpassungswerte umfasst.

8. Verfahren nach Anspruch 6 oder 7, wobei die Hilfsdaten ferner Inhaltsinformationen umfassen, die dem Eingangsvideosignal entsprechen, wobei die Inhaltsinformationen wenigstens eines von Genreinformationen über den Inhalt des Eingangsvideosignals, Handlungsinformationen über den Inhalt und Betrachtungsalter-Informationen über den Inhalt umfassen.

9. Verfahren nach einem der Ansprüche 6 bis 8, wobei die Hilfsdaten ferner bildbezogene Informationen über das Eingangsvideosignal umfassen, die wenigstens eines von Szenenwechsel-Informationen des Eingangsvideosignals, Videoattribut-Informationen des Eingangsvideosignals und Minimal- und Maximaltiefenwert-Informationen des Eingangsvideosignals umfassen.

10. Verfahren nach einem der Ansprüche 6 bis 9, wobei die Hilfsdaten ferner bildbezogene Informationen über das Eingangsvideosignal in der Form von Schlüsselbild-Informationen umfassen und das Verfahren das Berechnen eines Tiefenanpassungswertes eines Schlüsselbildes und das Abschätzen eines Tiefenanpassungswertes eines Nicht-Schlüsselbildes entsprechend dem berechneten Tiefenanpassungswert des Schlüsselbildes umfasst.

**Revendications**

1. Appareil (100) de traitement d'images tridimensionnelles (3D) comprenant :

   un analyseur de métadonnées (133) qui est configuré pour analyser des métadonnées d'un signal vidéo d'entrée, les métadonnées comprenant une carte de profondeur, et également configuré pour extraire, à partir des métadonnées, des données auxiliaires à utiliser pour ajuster la carte de profondeur du signal vidéo d'entrée, les données auxiliaires comprenant des informations de caméra stéréo comportant au moins un des éléments suivants : informations de distance entre des caméras stéréo, informations d'objectif d'une caméra stéréo, informations de mise au point d'une caméra stéréo, informations d'éclairage d'une caméra stéréo, et informations d'exposition d'une caméra stéréo ;
   un processeur de métadonnées (135) qui est configuré pour calculer une valeur d'ajustement de profondeur servant à ajuster la carte de profondeur en fonction des informations de caméra stéréo des données auxiliaires extraites ; et
   un ajusteur de profondeur (137) qui est configuré pour ajuster la carte de profondeur en fonction de la valeur d'ajustement de profondeur calculée, et pour ajuster le signal vidéo d'entrée afin de disposer d'un effet de profondeur 3D basé sur la carte de profondeur ajustée.

2. Appareil de traitement d'images 3D selon la revendication 1, dans lequel le processeur de métadonnées (135) est configuré pour calculer une pluralité de valeurs d'ajustement de profondeur correspondant à une pluralité de données auxiliaires extraites à partir des métadonnées par l'analyseur de métadonnées (133), pour calculer une valeur d'ajustement de profondeur finale en pondérant et en ajoutant la pluralité calculée de valeurs d'ajustement de profondeur, et pour transmettre la valeur d'ajustement de profondeur finale calculée à l'ajusteur de profondeur (137).

3. Appareil de traitement d'images 3D selon la revendication 1 ou 2, dans lequel les données auxiliaires comprennent en outre des informations de contenu correspondant au signal vidéo d'entrée, les informations de contenu comprenant au moins un élément parmi des informations de genre sur le contenu du signal vidéo d'entrée, des informations de scénario sur le contenu, et des informations d'âge des spectateurs sur le contenu.

4. Appareil de traitement d'images 3D selon une des revendications 1 à 3, dans lequel les données auxiliaires comprennent en outre des informations liées à l'image sur le signal vidéo d'entrée, comprenant au moins un élément parmi des informations de changement de scène du signal vidéo d'entrée, des informations d'attribut vidéo du signal vidéo d'entrée, et des informations de valeur de profondeur minimale et maximale du signal vidéo d'entrée.

5. Appareil de traitement d'images 3D selon une des revendications 1 à 4, dans lequel les données auxiliaires comprennent des informations liées à l'image correspondant au signal vidéo d'entrée sous la forme d'informations d'images clés, et le processeur de métadonnées est configuré pour calculer une valeur d'ajustement de profondeur d'une image clé et pour estimer une valeur d'ajustement de profondeur d'une image non-clé en fonction de la valeur d'ajustement de profondeur calculée de l'image clé.

**6.** Procédé d'ajustement d'un effet de profondeur tridimensionnel (3D) d'un appareil de traitement d'images 3D, le procédé comprenant les étapes suivantes :

analyser des métadonnées sur un signal vidéo d'entrée, les métadonnées comprenant une carte de profondeur, et extraire, à partir des métadonnées, des données auxiliaires à utiliser pour ajuster la carte de profondeur du signal vidéo d'entrée en ajustant la carte de profondeur, les données auxiliaires comprenant des informations de caméra stéréo comportant au moins un des éléments suivants : informations de distance entre des caméras stéréo, informations d'objectif d'une caméra stéréo, informations de mise au point d'une caméra stéréo, informations d'éclairage d'une caméra stéréo, et informations d'exposition d'une caméra stéréo ;
calculer une valeur d'ajustement de profondeur servant à ajuster la carte de profondeur en fonction des informations de caméra stéréo des données auxiliaires extraites (S12) ; et
ajuster la carte de profondeur en fonction de la valeur d'ajustement de profondeur calculée (S13), et ajuster le signal vidéo d'entrée afin de disposer d'un effet de profondeur 3D basé sur la carte de profondeur ajustée (S14).

**7.** Procédé selon la revendication 6, dans lequel le calcul de la valeur d'ajustement de profondeur (S12) comprend les opérations consistant à calculer une pluralité de valeurs d'ajustement de profondeur correspondant à une pluralité de données auxiliaires extraites lors de l'extraction des données auxiliaires, et calculer une valeur d'ajustement de profondeur finale en pondérant et en ajoutant la pluralité calculée de valeurs d'ajustement de profondeur.

**8.** Procédé selon la revendication 6 ou 7, dans lequel les données auxiliaires comprennent en outre des informations de contenu correspondant au signal vidéo d'entrée, les informations de contenu comprenant au moins un élément parmi des informations de genre sur le contenu du signal vidéo d'entrée, des informations de scénario sur le contenu, et des informations d'âge des spectateurs sur le contenu.

**9.** Procédé selon une des revendications 6 à 8, dans lequel les données auxiliaires comprennent en outre des informations liées à l'image sur le signal vidéo d'entrée, comprenant au moins un élément parmi des informations de changement de scène du signal vidéo d'entrée, des informations d'attribut vidéo du signal vidéo d'entrée, et des informations de valeur de profondeur minimale et maximale du signal vidéo d'entrée.

**10.** Procédé selon une des revendications 6 à 9, dans lequel les données auxiliaires comprennent en outre des informations liées à l'image sur le signal vidéo d'entrée sous la forme d'information d'images clés, et le procédé comprenant les opérations consistant à calculer une valeur d'ajustement de profondeur d'une image clé et estimer une valeur d'ajustement de profondeur d'une image non clé en fonction de la valeur d'ajustement de profondeur calculée de l'image clé.

# FIG. 1

# FIG. 2

# FIG. 3A

TENSION

CLIMAX

RISING ACTION

EXPOSITION

INCITING
ACTION

FALLING ACTION

DENOUEMENT

T

DRAMA STRUCTURE (STORY LINE)

# FIG. 3B

FIG. 4

# FIG. 5

KEY FRAME

KEY FRAME INFORMATION

KEY FRAME

ESTIMATE OR GENERATE DEPTH MAP OF KEY FRAME

CALCULATE AT LEAST ONE 3D EFFECT ADJUSTING VALUE BY ANALYZING AND PROCESSING AT LEAST ONE AUXILIARY DATA ABOUT KEY FRAME

CALCULATE FINAL 3D ADJUSTING VALUE BY ADDING UP AT LEAST ONE 3D EFFECT ADJUSTING VALUE ABOUT KEY FRAME

NON-KEY FRAME

FINAL 3D EFFECT ADJUSTING VALUE OF KEY FRAME

ESTIMATE 3D EFFECT ADJUSTING VALUE OF NON-KEY FRAME

DEPTH BETWEEN FRAMES AND/OR MOTION VARIATION

EP 2 515 544 B1

# FIG. 6

```
                    ┌──────────┐
                    │  START   │
                    └────┬─────┘
                         │
                         ▼
         ┌───────────────────────────────────┐
  S11 ───│   EXTRACT AUXILIARY DATA FROM      │
         │           META DATA               │
         └───────────────┬───────────────────┘
                         │
                         ▼
         ┌───────────────────────────────────┐
         │   CALCULATE 3D ADJUSTING VALUE     │
  S12 ───│  ABOUT 3D INFORMATION ON THE BASIS │
         │          OF AUXILIARY DATA         │
         └───────────────┬───────────────────┘
                         │
                         ▼
         ┌───────────────────────────────────┐
  S13 ───│        RENEW 3D INFORMATION        │
         └───────────────┬───────────────────┘
                         │
                         ▼
         ┌───────────────────────────────────┐
         │  ADJUSTING 3D EFFECT OF INPUT VIDEO│
  S14 ───│   SIGNAL ON THE BASIS OF RENEWED   │
         │          3D INFORMATION            │
         └───────────────┬───────────────────┘
                         │
                         ▼
                    ┌──────────┐
                    │   END    │
                    └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010079921 A
- WO 2011013030 A
- US 20100166338 A